Europäisches Patentamt

European Patent Office

Office européen des brevets

(19)

(11) Numéro de publication : **0 344 071 B1**

(12) **FASCICULE DE BREVET EUROPEEN**

(45) Date de publication du fascicule du brevet :
23.12.92 Bulletin 92/52

(51) Int. Cl.⁵ : **H04N 7/16**

(21) Numéro de dépôt : **89401435.6**

(22) Date de dépôt : **25.05.89**

(54) **Procédé de diffusion et de réception de messages de gestion de titres d'accès.**

(30) Priorité : **27.05.88 FR 8807087**

(43) Date de publication de la demande :
**29.11.89 Bulletin 89/48**

(45) Mention de la délivrance du brevet :
**23.12.92 Bulletin 92/52**

(84) Etats contractants désignés :
**DE GB NL**

(56) Documents cités :
**EP-A- 0 021 938**
**EP-A- 0 127 381**
**EP-A- 0 155 762**
**US-A- 4 292 650**

(72) Inventeur : **Guillou, Louis**
**16, rue de l'Ise**
**F-35230 Bourgbarre (FR)**
Inventeur : **Blineau, Joseph**
**65, rue de l'Alma**
**F-35000 Rennes (FR)**
Inventeur : **Coutrot, Françoise**
**6, Allée de la Croix Connue**
**F-35510 Cesson Sevigne (FR)**
Inventeur : **Lenoir, Vincent**
**6, rue de la Fresnerie**
**F-35510 Cesson Sevigne (FR)**

(74) Mandataire : **Mongrédien, André et al**
**c/o BREVATOME 25, rue de Ponthieu**
**F-75008 Paris (FR)**

(73) Titulaire : **FRANCE TELECOM**
**6, Place d'Alleray**
**F-75015 Paris (FR)**
Titulaire : **TELEDIFFUSION DE FRANCE SA**
**10 rue d'Oradour sur Glane**
**F-75932 Paris Cédex 15 (FR)**

## Description

La présente invention a pour objet un procédé de diffusion de messages de gestion de titres d'accès et un procédé de réception de messages ainsi diffusés.

Certains réseaux de diffusion de programmes de télévision fonctionnent sur le principe de l'embrouillage d'un programme à l'émission et du désembrouillage du message reçu sous le contrôle d'un titre d'accès.

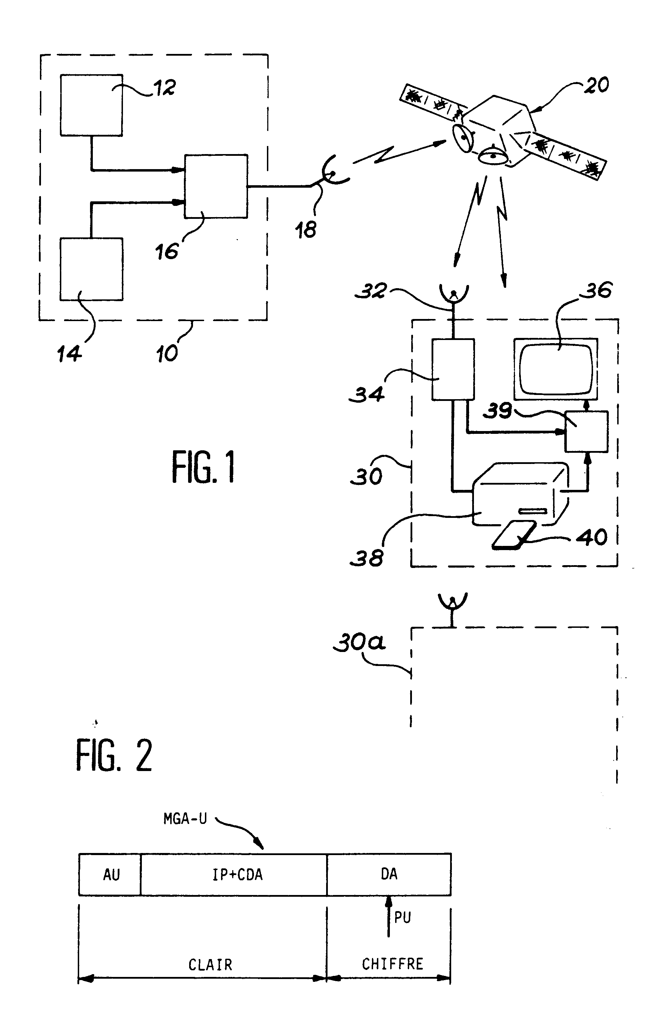

La figure 1 représente schématiquement l'organisation d'un tel réseau dans le cas de la diffusion par satellite artificiel. L'extension à un réseau de distribution par câbles ou par diffusion hertzienne est immédiate.

Dans un centre d'émission unique 10, on trouve un programmateur 12 constituant un message télévisé, un circuit de gestion 14 constituant des messages de contrôle et de gestion de titres d'accès et un émetteur 16 relié à une antenne 18.

Un satellite 20, par exemple géostationnaire, reçoit l'onde émise, l'amplifie et la réémet en direction de la terre.

Une pluralité de récepteurs 30, 30a, etc. sont équipés d'une antenne 32, d'un circuit de réception 34 séparant le signal vidéo embrouillé des signaux de contrôle et de gestion, un décodeur 39 recevant les premiers et un dispositif d'accès conditionnel 38 recevant les seconds. Le dispositif d'accès conditionnel délivre au décodeur 39 un mot de contrôle nécessaire au désembrouillage du signal reçu qui est alors envoyé au récepteur de télévision 36. Le dispositif d'accès conditionnel 38 reçoit un processeur de sécurité 40. Le processeur de sécurité contient le ou les titre(s) d'accès correspondant aux divers programmes diffusés. Suivant les réalisations, le processeur de sécurité peut être enterré dans le dispositif d'accès conditionnel ou être détachable, du genre carte à puce ou carte "intelligente".

Pour accéder à un programme protégé, il faut que le dispositif d'accès conditionnel puisse exploiter une des messageries de contrôle des titres d'accès qui accompagnent le programme embrouillé.

Chaque messagerie de contrôle des titres d'accès comporte en général trois champs :
- un identificateur de la clé de service à utiliser,
- un paramètre précisant les conditions d'accès à satisfaire pour avoir le droit d'utiliser cette clé de service, et
- un cryptogramme d'un mot de contrôle.

Un quatrième champ, dit de redondance, peut être utilement ajouté, afin que le processeur de sécurité ne puisse plus pratiquement être utilisé en dehors du contexte prévu.

Quand le processeur de sécurité contient un droit d'accès convenable, c'est-à-dire quand il détient la clé de service indiquée par l'identificateur et que cette clé est munie d'un statut compatible avec certaines des conditions indiquées par le paramètre, le processeur de sécurité déchiffre le cryptogramme pour reconstituer le mot de contrôle.

Le mot de contrôle permet au décodeur de désembrouiller les composantes du programme.

Pour modifier un droit d'accès, il faut exploiter une messagerie de gestion des titres d'accès. Elaborée par le programmateur, cette messagerie ne doit être ni imitable ni falsifiable par les utilisateurs.

Le processeur de sécurité d'un usager offre au programmateur deux moyens de gestion assez différents :
- la crypto-écriture, qui permet de distribuer une nouvelle clé de service ; c'est essentiellement un mécanisme de confidentialité et de manipulation de secrets,
- la crypto-valorisation qui permet de modifier le statut d'utilisation d'une clé de service qui se trouve déjà dans le processeur de sécurité ; c'est essentiellement un mécanisme d'intégrité et de signature.

Les cartes à puce du type porte-clés PC1 disposent de ces deux mécanismes sécurisés. La carte utilise alors une clé de distribution, qui lui est propre et peut être reconstituée par des processeurs de contrôle (cartes mères ou modules mères). Le processeur mère qui a reconstitué la clé de distribution de la carte fille de l'usager, à partir d'un secret de base et d'une donnée de diversification propre à la carte (par exemple, le numéro de série de la puce, ou plutôt, dans le cas de l'invention qui va être décrite, une adresse de l'usager par rapport au programmateur), calcule ensuite un cryptogramme.

La carte de l'usager déchiffre le cryptogramme pour examiner le résultat : persuadée d'être en présence de son maître quand elle détecte la redondance prévue (par exemple, le résultat répète un motif de 32 bits), la carte fille exécute en toute sérénité les ordres qui lui sont donnés par le paramètre transmis en clair (qui participe au calcul) et par le résultat (qui donne un mot secret à écrire).

Les cartes porte-clés PC1 prévoient l'usage systématique de ces mécanismes pour écrire tout nouveau secret (en particulier une clé) et pour gérer les droits attachés aux clés. La messagerie de gestion de titres est alors individualisée, personnalisée pour un unique usager.

Si cette méthode est efficace pour gérer des cartes appelant un serveur de gestion à travers un réseau interactif, par exemple avec un Minitel muni d'un lecteur de carte à mémoire, elle est peu satisfaisante pour gérer des usagers à travers un réseau de diffusion ou un réseau de distribution par câbles en arborescence.

En effet, l'émission de messages individuels nécessite un débit d'information important. Ainsi, la figure 2 montre quelle peut être la structure d'un tel message de gestion à adressage unique. Il commence par un champ AU comprenant l'adresse unique de l'usager visé, un champ IP+CDA correspondant à l'identification du programmeur et la caractérisation du droit d'accès et, enfin, un troisième champ DA correspondant à la valeur du droit d'accès à écrire ou à modifier dans le titre d'accès de l'usager. Les données des deux premiers champs sont émises en clair ; les données du troisième sont soit émises en clair elles aussi, soit chiffrées par une clé de programmateur unique PU.

Un tel message doit être répété avant diffusion d'un programme donné, autant de fois qu'il y a d'usagers requérant un droit d'accès à ce programme.

Dans la demande de brevet PCT N° WO 85/00491 intitulée "Encrypted Broadcast Television System", il a été proposé de réduire ce débit en partageant les messages de gestion des titres d'accès entre plusieurs usagers. Pour cela, une clé partagée est distribuée au préalable à tous les membres d'un groupe d'usagers par l'envoi massif de messages à adressage individuel.

Mais cette solution présente des inconvénients. La constitution d'un groupe est statique, c'est-à-dire définie artificiellement à l'avance, en dehors des messages eux-mêmes. Cela suppose que le comportement des usagers est uniforme par rapport à l'acquisition des droits d'accès. Lorsque le regroupage devient inefficace, du fait d'une trop grande disparité dans les requêtes des usagers, une redéfinition du groupe devient nécessaire avec, à nouveau, envoi massif de messages à adressage individuel.

En définitive, dans un tel système, on passe son temps à gérer des clés et non des droits.

La présente invention a pour but de remédier à ces inconvénients. A cette fin, l'invention propose une autre manière de partager les messages de gestion de titres d'accès. Elle se fonde sur la philosophie des cartes porte-clés selon laquelle, pour modifier l'état d'un usager, il suffit de modifier le statut d'utilisation d'une clé de service dans le dispositif de sécurité de l'usager. Au lieu de gérer des clés, on gère alors des droits d'utilisation d'une clé. Pour modifier le statut de quelques usagers, il suffit de s'adresser à ces usagers, sans déranger les autres.

A l'analyse des informations contenues dans un message individuel (cf. Figure 2), il peut être fait la constatation suivante : une partie du message est spécifique de l'usager (il s'agit de l'adresse unique AU) et une partie du message est commune à l'ensemble des usagers ayant souscrit le même droit d'accès. Pour ces informations communes, les unes sont en clair (identification du programmateur et caractérisation du droit d'accès) et sont naturellement partageables, les autres sont chiffrées (il s'agit de la valeur du droit d'accès) et, dans le cas de message individuel, sont spécifiques à un usager du fait de l'utilisation d'une clé de programmateur unique.

L'originalité du procédé de l'invention est de mettre à profit cette analyse pour partager au maximum les éléments communs aux différents usagers. Le procédé de l'invention repose sur l'introduction de deux nouveaux types de messages :

a) des messages de gestion à usage général (MGG en abrégé) qui sont interprétables par l'ensemble des usagers et qui contiennent les informations communes à l'ensemble des usagers qui vont être habilités. Ces messages MGG ont pour objet de décrire les caractéristiques générales des droits d'accès qui vont être validés, ainsi que l'identification du programmateur, mais aussi de définir suivant quelle règle les usagers vont être regroupés. Enfin, ces messages MGG contiennent une information de lien qui permet de les corréler sans ambiguïté avec les messages qui vont suivre. La fréquence de transmission de ces messages MGG est très faible ; théoriquement, il suffit de transmettre un seul de ces messages en amont de l'ensemble des messages de validation de groupes d'usagers ; cependant, pour des raisons de temps d'accrochage et de resynchronisation éventuelle, il est souhaitable de transmettre à un rythme lent mais régulier de tels messages (typiquement un message par seconde est très confortable).

b) des messages de gestion à adressage partagé (MGA-P en abrégé) qui sont spécifiques d'un groupe d'usagers, le regroupage ayant été défini dans le message MGG qui précède. Le groupe d'usagers partage une adresse AP qui apparaît en tête du message MGA-P et permet au groupe d'usagers de filtrer le message adéquat qui lui est destiné. Les informations nécessaires à la description de la valeur du droit d'accès peuvent être contenues dans le message MGA-P et peuvent être chiffrées par la clé de service du programmateur. Ce message MGA-P contient une description de l'ensemble des usagers autorisés dans le groupe à acquérir ce droit d'accès commun ; cette dernière description apparaît, elle, en clair. L'élément de sécurité qui gère les messages liés à l'accès conditionnel, recevant un message MGG puis un message MGA-P le concernant, vérifie qu'il est autorisé à acquérir le droit d'accès et, dans l'affirmative, déchiffre l'information liée au droit d'accès (si celle-ci a été chiffrée) pour pouvoir en déduire la valeur à stocker. Le déchiffrement (s'il a lieu) met en jeu la clé de service, commune à l'ensemble des usagers, mais aussi l'ensemble des paramètres en clair qui qualifie le droit d'accès, le programmateur et le groupe, ceci pour éviter toute pré-manipulation frauduleuse des paramètres en clair en vue d'obtenir une situation plus favorable à l'usager. Le résultat final, qui représente le droit d'accès, doit présenter une certaine redondance pour s'assurer de la validité du calcul et éliminer les chances de réussite dans la manipulation des données.

Il reste à définir comment est calculée dynamiquement et en temps réel, grâce à la réception d'un message MGG, l'adresse partagée AP d'un usager. L'adresse partagée AP apparaît comme un sous-ensemble de l'adresse unique AU. Les éléments de l'adresse unique constituant l'adresse partagée AP sont définis dans le cadre du message MGG et il n'y a donc pas de groupage figé des usagers. C'est là un élément original et important du procédé de l'invention par rapport à la solution existante mentionnée plus haut.

Le droit d'accès n'est pas nécessairement chiffré. Il peut être émis en clair. Il n'est pas non plus nécessairement dans le message MGA-P mais pourrait être dans le message MGG.

De toute façon, les caractéristiques et avantages de l'invention apparaîtront mieux à la lumière de la description qui va suivre. Cette description porte sur des exemples de réalisation donnés à titre explicatif et non limitatif et elle se réfère à des dessins annexés sur lesquels :

- la figure 1, déjà décrite, représente schématiquement un réseau de diffusion de programmes de télévision,
- la figure 2, déjà décrite, montre la structure d'un message à adressage individuel selon l'art antérieur,
- la figure 3 montre la structure générale d'un message de gestion,
- la figure 4 montre la structure générale d'un message de gestion à usage général,
- la figure 5 montre la structure générale d'un message de gestion à adressage partagé,
- la figure 6 montre la structure numérique d'une adresse unique,
- la figure 7 illustre un exemple de message de gestion à usage général,
- la figure 8 illustre un premier exemple de message de gestion à usage partagé,
- la figure 9 illustre un second exemple de message de gestion à usage partagé,
- la figure 10 est un organigramme montrant les opérations effectuées dans le dispositif de sécurité d'un usager.

Dans la description qui suit, on suppose, à titre explicatif, que le message caractérisant le droit d'accès est situé dans MGA-P et est chiffré. Mais ce mode de réalisation n'est pas limitatif.

Selon l'invention, on commence par répertorier les usagers de l'audience ayant souscrit un même droit d'accès ; on définit ensuite un groupe incluant les usagers ayant souscrit ce même droit d'accès. Pour ce groupe, l'adresse de chaque usager peut être considérée comme comprenant une adresse partagée propre à tous les usagers du groupe et une sous-adresse unique définissant cet usager au sein du groupe.

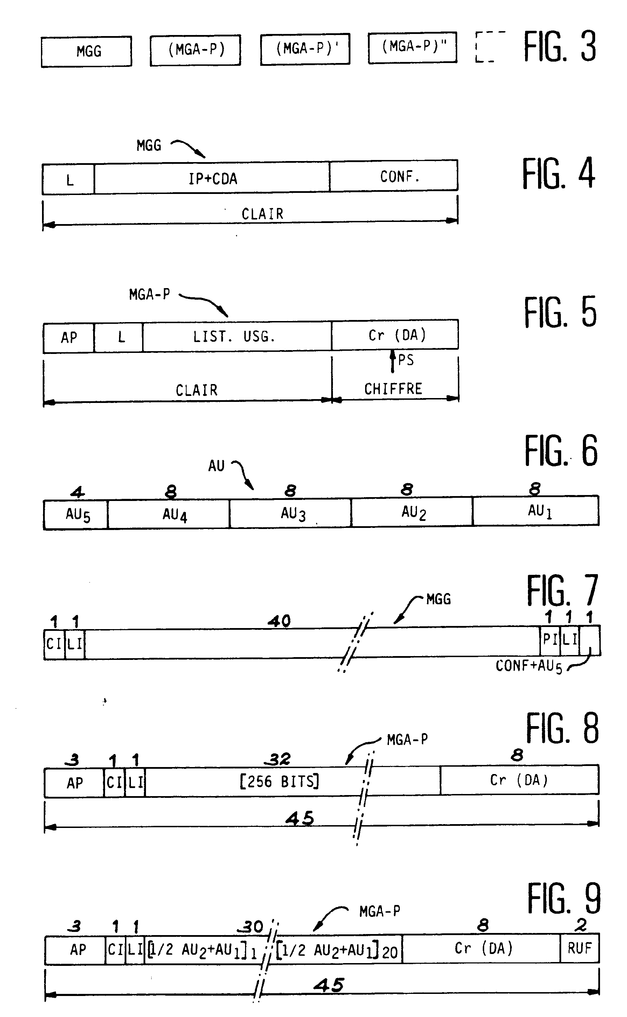

On forme et on diffuse alors un message de gestion dont la structure est illustrée sur la figure 3. Il comprend, en tête, un message de gestion à usage général MGG, puis un ou plusieurs messages de gestion à adressage partagé (MGA-P) (MGA-P'), etc...

On peut rediffuser à nouveau le message MGG suivi de messages MGA-P.

La structure d'un message de gestion à usage général est illustrée sur la figure 4. Il comprend :
- une information de lien, (L),
- un premier champ numérique contenant des informations communes à l'ensemble des usagers de l'audience, ces informations identifiant le service programmateur (IP) et caractérisant le droit d'accès à valider (CDA),
- un second champ définissant une conformation de groupe d'usagers (CONF).

Toutes les données de ces deux champs sont diffusées en clair.

La structure d'un message de gestion à adressage partagé est illustrée sur la figure 5. Elle comprend :
- l'adresse partagée du groupe d'usagers (AP), adresse dont l'organisation est spécifiée par l'information de conformation (CONF) contenue dans le message de gestion à usage général qui précède, cette adresse étant émise en clair,
- une information de lien (L),
- un champ définissant la liste des usagers appartenant au groupe visé pour lesquels un droit d'accès doit être écrit, ces informations étant émises en clair,
- un champ contenant, dans la variante illustrée, un cryptogramme Cr(DA) définissant la valeur commune du droit d'accès ; ce cryptogramme est obtenu par l'introduction d'une redondance puis par un algorithme de chiffrement utilisant la clé de service et un paramètre.

On notera attentivement que, selon l'invention, la définition du groupe est inhérente au message lui-même, grâce à l'information de conformation (CONF) du message à usage général et à l'adresse partagée (AP) du message de gestion à adressage partagé qui suit. Un tel groupe peut être reconfiguré en fonction de chaque droit d'accès commun à écrire, par modification de l'information de conformation et de l'adresse partagée.

Par opposition au procédé de regroupage de l'art antérieur qui est "statique" ou si l'on veut "extrinsèque", on peut dire que le regroupage de l'invention est "dynamique" ou "intrinsèque".

On va décrire plus en détail un mode de réalisation dans le cas de la diffusion par satellite. Dans ce cas, le format de transmission est bien défini. Les informations sont émises par paquets. Pour les messages liés à l'accès conditionnel, étant donné les mécanismes de détection et de correction d'erreurs mis en oeuvre, le nombre de données utiles par paquet est de 45 octets.

Par ailleurs, le nombre d'octets constituant la définition de AU et de AP est également défini. Il est respectivement de 4,5 et de 3 octets.

On voit sur la figure 6, la structure d'une adresse unique AU, qui comprend quatre octets AU1, AU2, AU3 et AU4 et un demi-octet (ou quartet) AU5. En réalité, AU5 ne change que pour des capacités d'adressage supérieures à quatre milliards.

L'adresse partagée AP devant être de 3 octets, il y a au moins cinq manières d'extraire 3 octets parmi 4,5. On peut avoir, par exemple :

$$AU_4 \; AU_3 \; AU_2$$
$$AU_4 \; AU_3 \; AU_1$$
$$AU_4 \; AU_2 \; AU_1$$
$$AU_3 \; AU_2 \; AU_1$$
$$AU_5 \; AU_4 \; AU_3 \; 1/2 \; AU_2$$

Les quatre premières organisations peuvent être repérées par quatre bits désignant les octets sélectionnés. On a ainsi les quartets de conformation (CONF) suivants :

$$1 \; 1 \; 1 \; 0$$
$$1 \; 1 \; 0 \; 1$$
$$1 \; 0 \; 1 \; 1$$
$$0 \; 1 \; 1 \; 1$$

Pour la cinquième conformation, on peut convenir qu'elle est repérée par le quartet CONF = 0 0 0 0.

Par les quatre premières conformations d'adresse partagée on touche tous les usagers ayant en commun les 3 octets de AP, c'est-à-dire tous les usagers ayant, dans leur adresse unique, une valeur quelconque de l'octet ne figurant pas dans AP (pour une valeur de AU5 donnée). Autrement dit, on adresse ainsi virtuellement 256 usagers. Pour la cinquième conformation, on regroupe 4096 usagers.

L'organisation en 45 octets de messages de gestion à adressage général MGG et à adressage partagé MGA-P est illustrée sur les figures 6 à 8.

Sur la figure 7, le signal MGG comprend un premier octet CI, qui contient l'information de lien, un deuxième octet LI qui sert à définir la longueur du message MGG et 43 octets identifiant le programmateur et caractérisant le droit d'accès, un octet PI désignant l'organisation du groupe, un octet LI de valeur 01 et enfin un octet formé d'un quartet définissant la conformation (CONF) et du quartet AU5.

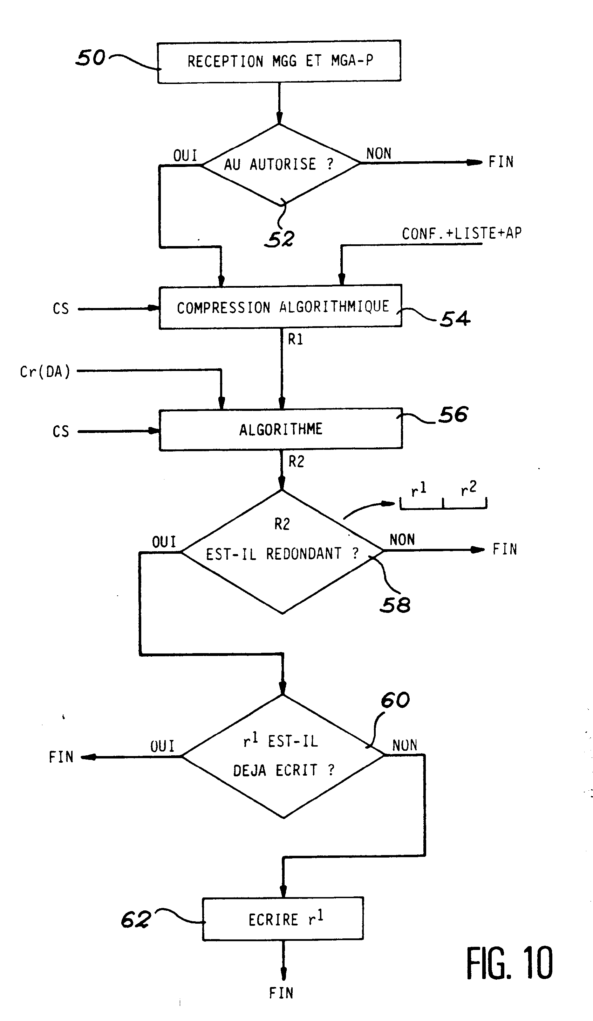

Sur les figures 8 et 9 sont illustrées deux structures différentes du message de gestion à adressage partagé dans le cas du regroupage de 256 et de 4096 usagers.

Sur la figure 8, le message comprend l'adresse partagée AP à 3 octets, un octet CI dont un bit contient l'information de lien, un octet LI puis un champ de 32 octets contenant 256 bits qui permet de décrire, pour chacun des 256 usagers dont l'adresse de groupe est AU5+AP, l'état autorisé (1) ou non autorisé (0) pour le droit d'accès qui suit, et enfin un champ de 8 octets décrivant le droit d'accès. Ce dernier champ, dans la variante décrite, est chiffré par la clé de service : c'est le cryptogramme Cr(DA) du droit d'accès.

Le champ d'adresse de 8 bits résultant de l'opération $AU-(AU_5+AP)$ de chaque usager permet de pointer sur le bit voulu du champ de 256 bits. Ce champ d'adresse est immédiatement défini par le quartet CONF puisqu'il correspond au "0" de ce quartet indiquant l'octet non utilisé dans l'adresse partagée. Ainsi :

à CONF = 1 1 1 0 correspond $AU_1$
à CONF = 1 1 0 1 correspond $AU_2$
à CONF = 1 0 1 1 correspond $AU_3$
à CONF = 0 1 1 1 correspond $AU_4$

La figure 9 illustre la structure d'un message MGA-P pour un regroupage de 4096 usagers, qui correspond à une conformation du type O O O O. Les cinq premiers octets sont identiques à ceux de la figure 8, mais le champ d'adresse comprend cette fois 30 octets constituant 20 adresses de la forme $[1/2 \; AU_2+AU_1]$. Un usager du groupe défini par AP ne sera autorisé, pour le droit d'accès défini plus loin, que si l'une des 20 adresses définies dans le message est telle que :

$$AU \; = \; AP + [1/2 \; AU_2 + AU_1]_i.$$

Le message se poursuit avec 8 octets du cryptogramme du droit d'accès et se termine avec un champ RUF non utilisé de 2 octets.

L'efficacité de l'une ou l'autre organisation dépend de la nature du droit d'accès. Dans le cas d'abonnement, la structure en regroupage de 256 usagers est plus efficace ; en paiement à l'émission avec choix anticipé, l'autre type d'organisation peut être plus efficace si les demandes formulées ne s'appliquent pas aisément au regroupage par 256.

La description qui précède se réfère à un partage des adresses uniques des usagers. Mais l'invention n'est pas limitée à ce cas. Elle s'applique aussi au cas des adresses uniques de programmateur (AUP) qui peuvent être séparées en une part partagée et une sous-adresse.

Si cette adresse unique de programmateur est constituée de 28 bits, elle peut être séparée en une partie de 8 bits les moins significatifs ($AUP_1$) et une de 20 bits $AUP_2$ les plus significatifs. L'adresse partagée sera constituée par les 20 bits les plus significatifs, complétés par 4 bits à 0 pour obtenir 3 octets. Le signal de conformation sera alors de la forme CONF = 1 1 1 1 avec, en complément, 4 bits non significatifs.

Le signal CONF = 1 1 1 1 indique que la sous-adresse est constituée par l'octet le moins significatif $AUP_1$.

La diffusion des divers messages de gestion ayant été décrite, il reste à préciser le procédé de réception de ces messages. La figure 12 illustre l'organigramme mis en oeuvre dans le dispositif de sécurité de l'usager.

Ce procédé comprend les opérations suivantes :

- on reçoit les messages (opération 50) avec leur partie message de gestion à usage général MGG contenant le signal de conformation de groupe (CONF) et leurs parties messages à adressage partagé MGA-P contenant l'adresse partagée (AP), la liste des usagers et le cryptogramme Cr(AD) ;

- on vérifie si l'adresse unique de l'usager (AU) correspond bien au groupe défini par l'adresse partagée (AP) et la liste des usagers dans ce groupe (opération 52),

- dans l'affirmative, on met en oeuvre un premier algorithme de compression (opération 54) utilisant la clé de service CS, pour extraire des données véhiculées par le message à usage général et par le message à usage partagé, un paramètre R1,

- on met en oeuvre un second algorithme (opération 56) utilisant la clé de service CS et le paramètre R1, cet algorithme étant appliqué au cryptogramme Cr(DA) définissant la valeur du droit d'accès, ce qui donne un résultat R2,

- on vérifie si le résultat R2 présente bien la redondance introduite à l'émission lors de la réalisation du cryptogramme (opération 58),

- on tire du résultat R2 obtenu la valeur r1 du droit d'accès à écrire et on examine si r1 est ou n'est pas déjà écrit (opération 60),

- dans la négative, on écrit ce droit d'accès dans le titre (opération 62).

De manière plus générale, il n'est pas nécessaire de combiner le traitement de la redondance et le traitement du chiffrement/déchiffrement comme dans la variante qui vient d'être décrite.

On peut d'abord mettre en oeuvre un traitement de redondance pour garantir l'authenticité de la messagerie. Quand le dispositif ne retrouve pas la redondance attendue, il arrête le déroulement de ses opérations internes en devenant muet : il faut remettre le dispositif à zéro pour le réactiver. Quand le dispositif retrouve la redondance attendue, il poursuit le déroulement de ses opérations internes et met en oeuvre le traitement de chiffrement/déchiffrement.

## Revendications

1. Procédé de diffusion de messages de gestion de titres d'accès conditionnel à des programmes diffusés, ces titres étant détenus par des usagers formant une audience, une adresse numérique unique étant affectée à chaque usager, les programmes diffusés étant embrouillés par une clé de service, cette clé étant détenue par tous les usagers, l'accès à un tel programme étant lié à un statut d'utilisation de la clé de service, ce procédé étant caractérisé par le fait que, pour écrire un droit d'accès dans certains titres, il comprend les opérations suivantes :

a) on répertorie les usagers de l'audience ayant souscrit un même droit d'accès,

b) on définit un groupe incluant les usagers ayant souscrit ce même droit d'accès, ce groupe d'usagers ayant la particularité de présenter une adresse ayant une partie commune dite adresse partagée, l'adresse de chaque usager pouvant ainsi être constituée par l'adresse partagée propre à tous les usagers du groupe et une sous-adresse unique définissant cet usager au sein du groupe,

c) on diffuse un message de gestion à usage général (MGG) constitué notamment par :
   - une information de lien,
   - un premier champ numérique contenant des informations communes à l'ensemble des usagers de l'audience, ces informations identifiant le service programmateur et caractérisant le droit d'accès à valider,
   - un second champ définissant une conformation de groupe, toutes les données de ces deux champs étant diffusées en clair,

d) on diffuse, après ce message de gestion à usage général (MGG), au moins un message de gestion à adressage partagé (MGA-P), un tel message de gestion à adressage partagé comprenant :
   - l'adresse partagée du groupe d'usagers, adresse dont l'organisation est spécifiée par l'information de conformation contenue dans le message de gestion à usage général qui précède, cette adresse étant émise en clair,
   - une information de lien,
   - un champ définissant la liste des usagers appartenant au groupe visé pour lesquels un droit d'accès doit être écrit, ces informations étant émises en clair,

e) on introduit dans l'un quelconque de ces messages (MGG et MGA-P) un champ contenant la valeur commune du droit d'accès,

f) on forme une redondance qui garantit l'authenticité du message,

g) un groupe d'usagers étant ainsi défini intrinsèquement par le message lui-même, grâce à l'information de conformation du message à usage général et à l'adresse partagée du message de gestion à adressage partagé qui suit, ce groupe pouvant être modifié en fonction de chaque droit d'accès commun à écrire, par modification de l'information de conformation et de l'adresse partagée.

2. Procédé selon la revendication 1, caractérisé par le fait que le champ contenant la valeur commune du droit d'accès est dans le message à adressage partagé (MGA-P).

3. Procédé selon la revendication 1, caractérisé par le fait que les informations contenant la valeur commune du droit d'accès sont chiffrées par un algorithme de chiffrement utilisant la clé de service et un paramètre pour former un cryptogramme Cr(DA).

4. Procédé selon la revendication 3, caractérisé par le fait que le cryptogramme définissant la valeur commune du droit d'accès contient ladite redondance.

5. Procédé selon la revendication 1, caractérisé par le fait que chaque adresse unique est constituée de 36 bits organisés en quatre octets (UA1, UA2, UA3, UA4) et un quartet (UA5).

6. Procédé selon la revendication 5, caractérisé par le fait que :
   - le signal de conformation de groupe (CONF) est constitué d'un quartet ayant 3 bits à 1 et 1 bit à 0, et par un quartet (UA5),
   - l'adresse partagée comprend 24 bits correspondant à 3 des octets de l'adresse unique, octets spécifiés par les bits à 1 du signal de conformation,
   - la sous-adresse unique comprend l'octet non utilisé dans l'adresse partagée, le groupe comprenant ainsi 256 usagers,
   - le champ d'adresse contenu dans le message partagé est constitué par 256 bits à 1 ou à 0 selon que l'usager correspondant est autorisé ou non à utiliser le droit d'accès diffusé dans ce message.

7. Procédé selon la revendication 5, caractérisé par le fait que :
   - le signal de conformation de groupe est constitué par un quartet dont tous les bits sont à 0 suivi d'un quartet non significatif,
   - l'adresse partagée est constituée par le quartet (UA5), les octets UA4 et UA3 et les quatre bits les plus significatifs de l'octet UA2,
   - le groupe comprend 4096 usagers,
   - le champ d'adresses du message partagé comprend 20 sous-adresses uniques, chacune désignant un usager auquel est destiné le droit d'accès diffusé,
   - les sous-adresses sont constituées par 12 bits correspondant aux 4 bits les moins significatifs de l'octet (UA2) et aux huit bits de l'octet (UA1).

8. Procédé selon la revendication 1, caractérisé par le fait que chaque adresse unique est constituée par une adresse unique du programmateur (PPUA) de 28 bits comprenant un octet PPUA1 et un groupe de 20 bits (PPUA2).

9. Procédé selon la revendication 7, caractérisé par le fait que :
   - le signal de conformation de groupe (CONF) est constitué par 4 bits à 1 suivis de 4 bits non significatifs,
   - l'adresse partagée comprend un quartet à 0 et les 20 bits les plus significatifs de l'adresse unique du programmateur,
   - le groupe comprend 256 usagers,
   - le champ d'adresse du message de gestion partagé est constitué par 256 bits à 1 ou 0 selon que l'usager correspondant est ou non autorisé à utiliser le droit d'accès diffusé dans ce message.

10. Procédé de réception et de traitement de messages de gestion de titres d'accès conditionnel à des programmes diffusés, ces messages ayant été diffusés selon le procédé de la revendication 1, caractérisé par le fait qu'il comprend les opérations suivantes, chez chaque usager de l'audience :
   a) on reçoit lesdits messages, avec leur message de gestion à usage général (MGG) contenant le signal de conformation de groupe et avec leurs messages de gestion à adresse partagée (MGA-P) contenant l'adresse partagée, la liste des usagers avec les informations correspondant au droit d'accès,
   b) on vérifie si l'adresse unique de l'usager correspond bien au groupe défini par l'adresse partagée et la liste des usagers dans ce groupe,
      - dans l'affirmative, on met en oeuvre un premier algorithme de compression utilisant la clé de service, pour extraire des données véhiculées par le message à usage général et par le message à usage partagé, un paramètre (R1),
      - on vérifie si le message reçu présente bien la redondance introduite à l'émission, on tire la valeur du droit d'accès à écrire,
      - on écrit ce droit d'accès dans le titre.

11. Procédé de réception et de traitement selon la revendication 10, caractérisé par le fait que les informations concernant le droit d'accès ayant été chiffrées sous forme d'un cryptogramme du droit d'accès, on met en oeuvre un second algorithme utilisant la clé de service et le paramètre (R1), cet algorithme étant appliqué au cryptogramme du droit d'accès.

12. Procédé de réception et de traitement selon la revendication 11, caractérisé en ce que le second algorithme mis en oeuvre donnant un résultat R2 on vérifie si le résultat R2 présente bien la redondance attendue, on tire alors du résultat R2 la valeur (r1) du droit d'accès à écrire.

**Patentansprüche**

1. Verfahren zum Ausstrahlen von Verwaltungsmitteilungen von Zugangs- oder Zugriffsberechtigungen, die Bedingung sind für ausgestrahlte Programme, wobei diese Berechtigungen von Verwendern innegehalten werden, die ein Publikum bilden, wobei eine einmalige numerische Adresse einem jeden Teilnehmer zugeordnet wird, wobei die ausgestrahlten Programme durch einen Bedienungsschlüssel verzerrt werden, wobei dieser Schlüssel von allen Teilnehmern bzw. Verwendern innegehalten wird, wobei der Zugang zu einem solchen Programm verbunden ist mit einer Verwendungserlaubnis des Bedienungsschlüssels, wobei das Verfahren dadurch gekennzeichnet ist, daß zum Schreiben einer Zugangsberechtigung in bestimmte Berechtigungen es die folgenden Schritte aufweist:

a) Aufnehmen der Teilnehmer des Publikums in ein Verzeichnis, die eine gleiche Zugriffsberechtigung unterschrieben haben,

b) Definieren einer Gruppe, die die Teilnehmer umfaßt, die dieselbe Zugriffsberechtigung unterschrieben haben, wobei die Gruppe der Teilnehmer die Besonderheit hat, daß sie eine Adresse aufweist, die einen gemeinsamen Bereich, genannt aufgeteilte Adresse, aufweist, wobei die Adresse eines jeden Teilnehmers so gebildet werden kann durch die aufgeteilte Adresse, die allen Teilnhmern der Gruppe zu eigen ist, und eine einmalige Unteradresse, die diesen Teilnehmer innerhalb der Gruppe definiert,

c) eine Verwaltungsmitteilung zur allgemeinen Verwendung (MGG) ausgestrahlt wird, die gebildet wird insbesondere aus:

- einer Verbindungsinformation,
- einem ersten numerischen Feld, das Informationen, die allen Teilnehmern des Publikums gemeinsam sind, enthält, wobei diese Informationen den Programmservice identifizieren und das Zugriffsrecht, das zu überprüfen ist, kennzeichnen,
- einem zweiten Feld, das eine Bildung bzw. Gestaltung der Gruppe definiert, wobei alle Daten dieser beiden Felder unverzerrt ausgestrahlt werden,

d) nach dieser Verwaltungsmitteilung zur allgemeinen Verwendung (MGG) wenigstens eine Verwaltungsmitteilung mit aufgeteilter Adressierung (MGA-P) ausgesendet wird, wobei eine derartige Verwaltungsmitteilung mit aufgeteilter Adressierung aufweist:

- die aufgeteilte Adresse der Teilnehmergruppe, eine Adresse, deren Organisation spezifiziert wird durch die Gestaltungsinformation, die in der Verwaltungsmitteilung für allgemeinen Gebrauch, die vorhergeht, enthalten ist, wobei diese Adresse unverzerrt ausgestrahlt wird,
- eine Verbindungsinformation,
- ein Feld, das die Liste der Teilnehmer definiert, die der angestrebten Gruppe zugehören, für die ein Zugriffsrecht geschrieben werden muß, wobei diese Informationen unverzerrt ausgestrahlt werden,

e) in irgendeine dieser Mitteilungen (MGG und MGA-P) ein Feld eingeführt wird, das den gemeinsamen Wert des Zugangsrechts enthält,

f) eine Redundanz gebildet wird, die die Authentizität der Nachricht garantiert,

g) eine Teilnehmergruppe sodann eigentlich durch die Mitteilung selbst definiert wird dank der Gestaltungsinformation der Mitteilung für allgemeine Verwendung und der aufgeteilten Adresse der Verwaltungsmitteilung mit aufgeteilter Adressierung, die folgt, wobei diese Gruppe in Abhängigkeit eines jeden gemeinsam zu schreibenden Zugriffsrechts modifiziert werden kann durch Veränderung der Gestaltungsinformation und der aufgeteilten Adresse.

2. Verfahren nach Anspruch 1, dadurch gekennzeichnet, daß das Feld, das den gemeinsamen Wert des Zugriffsrechts enthält, in der Mitteilung mit aufgeteilte Adressierung (MGA-P) ist.

3. Verfahren nach Anspruch 1, dadurch gekennzeichnet, daß die Informationen, die den gemeinsamen Wert des Zugriffsrechts enthalten, verschlüsselt sind durch einen Verschlüsselungsalgorithmus, der den Serviceschlüssel und ein Parameter verwendet, um ein Kryptogramm Cr(DA) zu bilden.

4. Verfahren nach Anspruch 3, dadurch gekennzeichnet, daß das Kryptogramm, das den gemeinsamen Wert des Zugriffsrechts definiert, die Redundanz enthält.

5. Verfahren nach Anspruch 1, dadurch gekennzeichnet, daß jede einmalige Adresse gebilet wird durch 36 Bits, die in 4 Oktette (UA1, UA2, UA3, UA4) und einem Quartett (UA5) aufgeteil sind.

6. Verfahren nach Anspruch 5, dadurch gekennzeichnet, daß:

- das Signal der Gestaltung der Gru ppe (CONF) aus einem Quartett, das 3 Bits à 1 und 1 Bit à 0 aufweist und aus einem Quartett (UA5) gebildet wird.

- die aufgeteilte Adresse 24 Bits aufweist entsprechend 3 der Oktette und der einmaligen Adresse, wobei die Oktette spezifiziert werden durch die Bits mit 1 des Gestaltungssignals,

- die einmalige Unteradresse das in der aufgeteilten Adresse nicht verwendete Oktett aufweist, wobei die Gruppe somit 256 Teilnehmer aufweist,

- das Adreßfeld, das in der aufgeteilten Mitteilung enthalten ist, gebildet wird durch 256 Bits à 1 oder à 0, je nachdem, ob der entsprechende Teilnehmer autorisiert ist oder nicht, das in dieser Mitteilung ausgesendete Zugriffsrecht zu verwenden.

7. Verfahren nach Anspruch 5, dadurch gekennzeichnet, daß:

- das Gestaltungssignal der Gruppe gebildet wird aus einem Quartett, bei dem alle Bits 0 sind, gefolgt von einem nicht-kennzeichnenden Quartett,

- die aufgeteilte Adresse gebildet wird durch das Quartett (UA5), die Oktette UA4 und UA3 und die 4 Bits, die am signifikantesten sind, des Oktotts UA2,

- die Gruppe 4096 Teilnehmer aufweist,

- das Feld der Adressen der aufgeteilten Mitteilung 20 einmalige Unteradressen aufweist, wobei jede einen Teilnehmer bezeichnet, für den das ausgestrahlte Zugriffsrecht bestimmt ist,

- die Unteradressen gebildet werden durch 12 Bits entsprechend den 4 Bits, die am wenigsten signifikant sind, des Oktetts (UA2) und den 8 Bits des Oktetts (UA1).

8. Verfahren nach Anspruch 1, dadurch gekennzeichnet, daß jede einmalige Adresse gebildet wird durch eine einmalige Adresse des Programmierers (PPUA) von 28 Bits mit einem Oktett PPUA1 und einer Gruppe von 20 Bits (PPUA2).

9. Vefahren nach Anspruch 7, dadurch gekennzeichnet, daß:

- das Gestaltungssignal zur Formung der Gruppe (CONF) gebildet wird aus 4 Bits à 1, gefolgt von 4 Bits, die nicht signifikant sind,

- die aufgeteilte Adresse ein Quartett à 0 und die 20 Bits, die am signifikantesten sind für die einmalige Adresse des Programmators, aufweist,

- die Gruppe 256 Teilnehmer aufweist,

- das Adressenfeld der aufgeteilten Verwaltungsmitteilung gebildet wird durch 256 Bits à 1 oder 0, je nachdem, ob der zugehörige Teilnehmer autorisiert ist oder nicht, das in dieser Mitteilung ausgestrahlte Zugriffsrecht zu verwenden.

10. Verfahren zur Aufnahme und zur Verarbeitung von Verwaltungsmitteilugen von Zugriffsberechtigungen, die Bedingung sind für ausgestrahlte Programme, wobei diese Mitteilungen nach dem Verfahren gemäß Anspruch 1 ausgestrahlt wurden, dadurch gekennzeichnet, daß es die folgenden Vorgänge bei einem jeden Teilnehmer des Publikums aufweist:

a) Empfang der genannten Mitteilungen mit ihrer Verwaltungsmitteilung für allgemeine Verwendung (MGG), die das Gruppengestaltungssignal enthält, und mit ihren Verwaltungsmitteilungen mit aufgeteilten Adressen (MGA-P), die die aufgeteilte Adresse, die Liste der Teilnehmer mit den Informationen, die den Zugriffsrechten entsprechen, enthalten,

b) Überprüfen, ob die einmalige Adresse des Teilnehmers wirklich der Gruppe entspricht, die durch die aufgeteilte Adresse und die Liste der Teilnehmer in dieser Gruppe definiert ist,

- im positiven Falle wird ein erster Kompressionsalgorithmus durchgeführt, der den Serviceschlüssel verwendet, um aus den durch die Mitteilng für allgemeine Verwendung und die Mitteilung für aufgeteilte Verwendung transportierten Daten einen Parameter (R1) herauszuziehen,

- Überprüfen, ob die empfangene Mitteilung sehr wohl die bei der Ausstrahlung eingeführte Redundanz aufweist,

- Herausziehen des Zugriffsrechtswerts, der zu schreiben ist,

- Einschreiben des Zugriffsrechts in die Zugriffsberechtigung.

11. Verfahren zur Aufnahme und zur Verarbeitung nach Anspruch 10, dadurch gekennzeichnet, daß da die Informationen, die das Zugriffsrecht betreffen, verschlüsselt sind, in Form eines Kryptogramms des Zugriffsrechts, ein zweiter Algorithmus durchgeführt wird, der den Serviceschlüssel und den Parameter (R1) verwendet, wobei dieser Algorithmus auf das Kryptogramm des Zugriffsrechts angewandt wird.

12. Verfahren zur Aufnahme und zur Verarbeitung nach Anspruch 11, dadurch gekennzeichnet, daß, da der zweite angewandte Algorithmus, der ein Ergebnis R2 ergibt, es überprüft wird, ob das Resultat R2 sehr wohl die erwartete Redundanz ergibt, und sodann der Wert (r1) des zu schreibenden Zugriffsrechts aus dem Resultat R2 herausgezogen wird.

## Claims

1. Process for the broadcasting of access title control messages conditional on broadcast programmes, said titles being held by users forming an audience, a single digital address being allocated to each user, the broadcast programmes being garbled by a service key, said key being held by all users, the access to such a programme being linked with a use status of the service key, said process being characterized in that, for writing an access right in certain titles, it comprises the following operations:

   a) there is a listing of the users of the audience which have subscribed to the same access right,

   b) a definition is made of a group including the users having subscribed to said same access right, said user group having the feature of an address with a common part, called a shared address, the address of each user thus being constituted by the shared address belonging to all users of the group and a single subaddress defining this user within the group,

   c) a general use control message (GCM) is broadcast and is more particularly constituted by:

      a link information,

      a first digital field containing the information common to all the users of the audience, said information identifying the scheduler service and characterizing the access right to be validated,

      a second field defining a group confirmation, all the data of said two fields being broadcast in uncoded form,

   d) following said general use control message (GCM) is broadcast at least one shared addressing control message (SACM), which comprises:

      the shared address of the group of users and the organization thereof is specified by the confirmation information contained in the preceding general use control message, said address being transmitted in uncoded form,

      a link information,

      a field defining the list of users belonging to the group aimed at for which an access right has to be written, said information being transmitted in uncoded form,

   e) a field containing the common value of the access right is introduced into any one of the messages (GCM or SACM),

   f) a redundancy is formed, which guarantees the authenticity of the message,

   g) a group of users has thus been intrinsically defined by the actual message, as a result of the confirmation information of the general use message and the shared address of the shared addressing control message which follows, said group being modifiable as a function of each common access right to be written through the modification of the confirmation information and the shared address.

2. Process according to claim 1, characterized in that the field containing the common value of the access right is in the shared addressing message (SACM).

3. Process according to claim 1, characterized in that the information containing the common value of the access right is encoded by an encoding algorithm using the service key and a parameter for forming a cryptogram Cr(DA).

4. Process according to claim 3, characterized in that the cryptogram defining the common value of the access right contains said redundancy.

5. Process according to claim 1, characterized in that each single address is constituted by 36 bits organized in 4 bytes (UA1, UA2, UA3, UA4) and one nibble (UA5).

6. Process according to claim 5, characterized in that

      the group confirmation signal (CONF) is constituted by a nibble having 3 bits at 1 and 1 bit at 0 and by a nibble (UA5),

      the shared address comprises 24 bits corresponding to 3 of the single address bytes specified by the bits at 1 of the confirmation signal,

      the single subaddress comprises the byte not used in the shared address, so that the group has 256 users,

      the address field contained in the shared message is constituted by 256 bits at 1 or 0, as a function of whether the corresponding user is or is not authorized to use the access right broadcast in said message.

7. Process according to claim 5, characterized in that:

      the group confirmation signal is constituted by a nibble, whereof all the bits are at 0, followed by a non-significant nibble,

      the shared address is constituted by the nibble (UA5), the bytes UA4 and UA3 and the four most significant bits of byte UA2,

      the group comprises 4096 users,

      the address field of the shared message comprises 20 single subaddresses, each designating a user for whom is intended the broadcast access right,

the subaddresses are constituted by 12 bits corresponding to the 4 least significant bits of the byte (UA2) and to the eight bits of the byte (UA1).

8. Process according to claim 1, characterized in that each single address is constituted by a single address of the 28 bit scheduler (PPUA) incorporating a byte PPUA1 and a group of 20 bits (PPUA2).

9. Process according to claim 7, characterized in that:

the group confirmation signal (CONF) is constituted by 4 bits at 1, followed by 4 non-significant bits,

the shared address comprises a nibble at 0 and the 20 most significant bite of the single address of the scheduler,

the group comprises 256 users,

the address field of the shared control message is constituted by 256 bits at 1 or 0, as a function of whether the corresponding user is or is not authorized to use the access right broadcast in said message.

10. Process for the reception and processing of access title control messages conditional on broadcast programmes, said messages having been broadcast according to the process of claim 1, characterized in that it comprises the following operations for each user of the audience:

a) the said messages are received, with their general use control message (GCM) containing the group confirmation signal and with their shared address control messages (SACM) containing the shared address, the list of users with the information corresponding to the access right,

b) a check is made to establish whether the single address of the user corresponds to the group defined by the shared address and the list of users in said group,

in the affirmative, a first compression algorithm is implemented using the service key, in order to extract a parameter (R1) from the data carried by the general use message and the shared use message,

a check is made to establish whether the message received has the redundancy introduced on transmission,

the value is then from the access right to be written,

the access right is written in the title.

11. Reception and processing process according to claim 10, characterized in that the information relating to the access right have been encoded in the form of a cryptogram of the access right, so that a second algorithm is implemented using the service key and the parameter (R1), said algorithm being applied to the cryptogram of the access right.

12. Reception and processing process according to claim 11, characterized in that the second implemented algorithm gives a result R2 and a check is made to establish whether said result gives the expected redundancy and from R2 is then taken the value (r1) of the access right to be written.

FIG. 1

FIG. 2

MGA-U

| AU | IP+CDA | DA |
|----|--------|-----|

PU

CLAIR                    CHIFFRE

| MGG | (MGA-P) | (MGA-P)' | (MGA-P)" | ⌐ ⌐ | FIG. 3 |

MGG

| L | IP+CDA | CONF. |

CLAIR

FIG. 4

MGA-P

| AP | L | LIST. USG. | Cr (DA) |

CLAIR — CHIFFRE ↑PS

FIG. 5

FIG. 6

AU

| 4 | 8 | 8 | 8 | 8 |
| AU5 | AU4 | AU3 | AU2 | AU1 |

FIG. 7

MGG

| 1 | 1 | 40 | 1 | 1 | 1 |
| CI | LI | | P | LI | |

CONF+AU5

FIG. 8

MGA-P

| 3 | 1 | 1 | 32 | 8 |
| AP | CI | LI | [256 BITS] | Cr (DA) |

45

FIG. 9

MGA-P

| 3 | 1 | 1 | 30 | 8 | 2 |
| AP | CI | LI | [1/2 AU2+AU1]1 | [1/2 AU2+AU1]20 | Cr (DA) | RUF |

45

50 ⌇ RECEPTION MGG ET MGA-P

OUI — AU AUTORISE ? — NON ⟶ FIN

52

CONF.+LISTE+AP

CS ⟶ COMPRESSION ALGORITHMIQUE ⌇ 54

R1

Cr(DA) ⟶

CS ⟶ ALGORITHME ⌇ 56

R2

$r^1$ $r^2$

R2

OUI — EST-IL REDONDANT ? — NON ⟶ FIN

58

60

FIN ⟵ OUI — $r^1$ EST-IL DEJA ECRIT ? — NON

62 ⌇ ECRIRE $r^1$

FIN

FIG. 10